# EUROPÄISCHE PATENTSCHRIFT

(11) **EP 2 375 243 B1**
(45) Veröffentlichungstag und Bekanntmachung des Hinweises auf die Patenterteilung: **07.06.2023**
(21) Anmeldenummer: 10003756.3
(22) Anmeldetag: 08.04.2010
(51) Int. Cl.: G01N 25/72, G01N 21/88, G06T 7/00

(54) **Thermografisches Prüfverfahren und Prüfvorrichtung zur Durchführung des Prüfverfahrens**
Thermographic testing method and device for carrying out the testing method
Procédé de contrôle thermographique et dispositif de contrôle pour l'exécution du procédé de contrôle

(43) Veröffentlichungstag der Anmeldung: 12.10.2011
(73) Patentinhaber: Institut Dr. Foerster GmbH & Co. KG, 72766 Reutlingen (DE)
(72) Erfinder: Traxler, Gerhard, 1110 Wien (AT); Palfinger, Werner, 1200 Wien (AT)
(74) Vertreter: Patentanwälte Ruff, Wilhelm, Beier, Dauster & Partner mbB

(56) Entgegenhaltungen:
- WO-A1-2009/065847
- US-A1- 2006 114 965
- US-A1- 2006 262 971
- HAMZAH A R ET AL: "AN EXPERIMENTAL INVESTIGATION OF DEFECT SIZING BY TRANSIENT THERMOGRAPHY" INSIGHT (NON-DESTRUCTIVE TESTING AND CONDITION MONITORING), BRITISH INSTITUTE OF NON- DESTR. TEST., NORTHAMPTON, GB, Bd. 38, Nr. 3, 1. Januar 1996 (1996-01-01) , Seiten 167-170,173, XP000857143 ISSN: 1354-2575
- AVDELIDIS N P ET AL: "Transient thermography in the assessment of defects of aircraft composites" NDT & E INTERNATIONAL, BUTTERWORTH-HEINEMANN, OXFORD, GB LNKD- DOI:10.1016/S0963-8695(03)00052-5, Bd. 36, Nr. 6, 1. September 2003 (2003-09-01), Seiten 433-439, XP004434271 ISSN: 0963-8695

## Beschreibung

### HINTERGRUND DER ERFINDUNG

Die Erfindung bezieht sich auf ein thermografisches Prüfverfahren zur ortsauflösenden Detektion und Identifikation von oberflächennahen Defekten in einem Prüfgegenstand sowie auf eine zur Durchführung des Prüfverfahrens geeignete Prüfvorrichtung.

Halbzeuge aus elektrisch leitfähigem Material, beispielsweise Knüppel, Stäbe, Stangen, Rohre oder Drähte aus metallischen Werkstoffen, können als Ausgangsmaterialien für hochwertige Endprodukte dienen und unterliegen häufig höchsten Qualitätsanforderungen. Die Prüfung auf Materialfehler, insbesondere auf oberflächennahe Defekte wie Risse, Lunker oder andere Materialinhomogenitäten, bildet einen wichtigen Teil der Qualitätskontrolle dieser Erzeugnisse. Dabei wird in der Regel eine möglichst lückenlose Prüfung der Materialoberfläche mit hoher örtlicher Auflösung angestrebt, die nach Möglichkeit möglichst frühzeitig in der Produktionskette durchgeführt wird, um auf Basis des Ergebnisses der Prüfung in Abhängigkeit von der Art der aufgefundenen Defekte zu entscheiden, ob die Defekte für die Weiterverarbeitung unkritisch oder zumindest durch Nachbearbeitung, wie Schleifen, reparabel sind oder ob das Material verworfen werden muss.

Neben den für solche Prüfungen vielfach verwendeten magnetischen Methoden, wie der Wirbelstromtechnik oder der Streuflusstechnik, werden heutzutage auch thermografische Prüfverfahren zur ortsauflösenden Detektion und Identifikation von oberflächennahen Defekten in Prüfgegenständen eingesetzt.

Bei einem bekannten thermografischen Prüfverfahren läuft ein elektrisch leitender Prüfgegenstand, beispielsweise ein Stahlknüppel, nach dem Walzen durch eine mit hochfrequentem Wechselstrom beaufschlagte Induktionsspule, die einen Stromfluss nahe der Oberfläche des Prüfgegenstandes induziert. Aufgrund des von der Erregungsfrequenz abhängigen Skineffektes ist dabei die Stromdichte in der Nähe der Prüflingsoberfläche größer als im Inneren des Prüfgegenstandes. Gefügestörungen, wie beispielsweise Risse, die im Querschnitt des induzierten elektrischen Stromflusses liegen, wirken als elektrische Widerstände und lenken den Stromfluss, der sich im Prüflingsmaterial den Weg des geringsten (elektrischen) Widerstandes sucht, um. Höhere Stromdichten, und damit auch höhere Verlustleistungen an den "Engstellen" des Stromflusses im Bereich der Defekte sind die Folge. Die im Bereich der Gefügestörungen entstehende Verlustleistung macht sich durch Erzeugung von Wärme in der Weise bemerkbar, dass der betroffene, lokal begrenzte Bereich unmittelbar an einer Gefügestörung eine im Vergleich zur störungsfreien Umgebung höhere Temperatur annimmt. Mit Hilfe einer Thermokamera oder anderer geeigneter wärmestrahlungsempfindlicher Erfassungseinrichtung kann nun basierend auf den lokalen Temperaturwerten innerhalb eines von der Erfassungseinrichtung erfassten Oberflächenbereichs die Anwesenheit von oberflächennahen Defekten ortsauflösend detektiert werden. In der Regel findet auch eine Visualisierung der erfassten Oberflächenbereiche statt und es können thermografisch ermittelte Auffälligkeiten mit einem nachgeschalteten Auswertesystem automatisch bewertet werden.

Die DE 10 2007 055 210 A1 beschreibt ein thermografisches Prüfverfahren und eine zur Durchführung des Prüfverfahrens eingerichtete Prüfvorrichtung. Die Prüfvorrichtung hat eine Induktionsspule zum Aufheizen eines Oberflächengebietes eines durch die Induktionsspule hindurchlaufenden metallischen Prüfgegenstandes, beispielsweise eines Stahlknüppels, sowie eine oder mehrere Infrarotkameras, um das Temperaturprofil des durchlaufenden Stahlknüppels zu messen. Die Ergebnisse der Messung werden zur Ansteuerung eines Farbmarkiersystems verwendet, um festgestellte Defekte zu markieren. Zur Auswertung der von den Infrarotkameras erfassten Thermografiebilder (Wärmebilder) ist gemäß der Beschreibung eine Auswertesoftware vorgesehen, die ein Wärmebild oder die Wärmebilder analysiert und Temperaturunterschiede oberhalb eines vorbestimmten Schwellwertes identifiziert und als einen Defekt meldet. Die Größe des Temperaturunterschiedes oberhalb des vorgegebenen Schwellwertes wird als eine Angabe der Tiefe des Defektes angesehen. Die Auswertesoftware kann Defekte sowohl hinsichtlich ihrer Länge als auch hinsichtlich der Größe der Temperaturdifferenz oberhalb des Schwellwertes auswerten. Die Auswertungssoftware kann Defekte mit einer Länge unterhalb einer minimalen Defektlänge aus einer Defektliste entfernen, so dass solche Defekte nicht als Defekte bewertet werden. Wenn jedoch ein Defekt unterhalb einer minimalen Defektlänge liegt, die Größe der Temperaturdifferenz jedoch oberhalb des Schwellwertes liegt, der oberhalb einer maximalen Größe der Temperaturdifferenz ist, so wird ein derartiger Defekt dennoch als Defekt gemeldet. Auf diese Weise wird ein Defekt in Abhängigkeit der Defektlänge und der Temperaturdifferenz zur Umgebung identifiziert.

In der Regel wird ein Anstieg im Temperaturprofil von mehr als 2 K gegenüber der Umgebung als Defekt angesehen, die Schwelltemperatur kann jedoch auch geringer gewählt werden. Ein Temperaturunterschied zur Umgebung von 5 K oder mehr wird eindeutig als ein Defekt identifiziert.

In der Regel ist einem auszuwertenden Temperaturprofil in der Praxis ein Störsignal mit nennenswerter Amplitude überlagert. Als Störquellen kommen unter anderem lokale Emissionsgradschwankungen der Prüfgegenstandsoberfläche, Reflexionen aus der Umgebung und allgemein im realen Prüfbetrieb nicht zu vermeidende Umstände, wie Fremdkörper an der Prüflingsoberfläche, in Betracht. Falschanzeigen können auch durch die Prüflingsgeometrie hervorgerufen sein, da beispielsweise Kanten an Vierkantprofilen häufig eine gegenüber der Umgebung erhöhte Temperatur zeigen. Typischerweise liegen die an einem rissartigen Defekt auftretenden Temperaturdifferenzen im Vergleich zur umgebenden Oberfläche in der Größenordnung von 1K bis 10K. Es wurde beobachtet, dass Störamplituden ohne weiteres auch in dieser Größenordnung liegen können. Es kann daher trotz eventueller Maßnahmen zur Verringerung der Störamplitude nicht ausgeschlossen werden, dass Störungen fälschlicherweise als Gefügefehler bzw. Defekte klassifiziert werden.

Der Fachartikel "An experimental investigation of defect sizing by transient thermography" von A.R. Hamazah et al. in: Insight, Vol 38 No 3, März 1996, Seiten 167 bis 173, beschreibt ein Verfahren der "Transient Thermography". Das Prinzip dieser Technologie beruht darauf, die Oberfläche zunächst mittels einer Blitzlampe gleichmäßig aufzuheizen und dann den Wärmefluss in das Testobjekt hinein, also den vertikalen Wärmefluss senkrecht zur Werkstückoberfläche, zu beobachten. Dieser Wärmefluss wird durch unter der Oberfläche liegende Defekte behindert, so dass der Defektbereich sich weniger schnell abkühlt als der Umgebungsbereich. Die zeitliche Entwicklung der Halbwertbreite des Temperaturprofils im Bereich eines Defekts wird dazu genutzt, den Durchmesser des Defekts zu bestimmen. Es wird auch die zeitliche Entwicklung des thermischen Kontrasts am Ort des Defekts beobachtet. Dieser nimmt nach dem Aufheizen zunächst langsam zu, bevor er nach Überschreiten eines Maximalwertes zu einem gewissen Zeitpunkt nach dem Aufheizen allmählich wieder abnimmt.

Der Fachartikel "Transient thermography in the assessment of defects of aircraft composites" von N.P. Avdelidis et al. in: NDT&E International 36 (2003, Seiten 433 bis 439, befasst sich ebenfalls mit der "Transient Thermography".

Die US 2006/0262971 A1 offenbart ein Verfahren, bei dem thermische Bilder eines Oberflächenbereiches erfasst werden. Aus den Bildern werden Pixelintensitäten bestimmt.

Bei dem aus der US 2006/0114965 A1 bekannten Verfahren werden Folgen von Thermografiebildern aufgenommen. Diese werden gemeinsam analysiert. Der Prüfgegenstand kann mittels Mikrowellen, Laser-Strahlung oder Induktion aufgeheizt werden.

Bei dem aus der WO 2009/065847 A1 bekannten Verfahren werden durch eine entlang der Oberfläche bewegte Wärmequelle fortlaufend bestimmte Oberflächenbereiche zunächst kontrolliert erwärmt. Nach einer vorbestimmten Zeit wird eine Temperaturmessung durchgeführt, um das Abkühlverhalten zu bestimmen.

### AUFGABE UND LÖSUNG

Es ist eine Aufgabe der Erfindung, ein thermografisches Prüfverfahren und eine zur Durchführung des Verfahrens geeignete thermografische Prüfvorrichtung bereitzustellen, die gegenüber dem Stand der Technik eine verbesserte Störungsunterdrückung bei der Auswertung thermografischer Signale bieten. Insbesondere soll die Trennschärfe bei der Unterscheidung zwischen realen Defekten und auf andere Störungen zurückzuführende Pseudodefekte verbessert werden. Vorzugsweise soll eine lückenlose Oberflächenprüfung von langgestreckten Gegenständen aus elektrisch leitfähigem Material mit erhöhter Zuverlässigkeit bei der Erkennung und Identifizierung von Defekten bereitgestellt werden.

Zur Lösung dieser und anderer Aufgaben stellt die Erfindung ein thermografisches Prüfverfahren mit den Merkmalen von Anspruch 1 sowie eine zur Durchführung des Verfahrens eingerichtete thermografische Prüfvorrichtungen mit den Merkmalen von Anspruch 8 bereit. Vorteilhafte Weiterbildungen sind in abhängigen Ansprüchen angegeben. Der Wortlaut sämtlicher Ansprüche wird durch Bezugnahme zum Inhalt der Beschreibung gemacht.

Bei dem Prüfverfahren wird ein zu prüfender Abschnitt des Prüfgegenstandes der Wirkung einer Heizeinrichtung ausgesetzt. Dies wird im Folgenden auch kurz als "Aufheizen" bezeichnet. Die Heizenergie wird dabei derart eingebracht, dass sich ein thermisches Ungleichgewicht zwischen mit Defekten behafteten Defektbereichen bzw. Fehlerstellen und dem defektfreien Prüflingsmaterial einstellt. Zu einer Fehlerstelle bzw. einem Defektbereich gehört dabei der eigentliche Fehler, z.B. ein Riss, und die unmittelbar angrenzende Umgebung. Die defektfreie Umgebung kann ggf. bei Einwirkung der Heizeinrichtung ihre Temperatur behalten, also nicht aufgeheizt werden, oder sie kann sich weniger stark als die Fehlerstellen aufheizen.

Bei elektrisch leitfähigen Prüfgegenständen, wie beispielsweise bei metallischen Knüppeln, Stäben, Drähten oder dergleichen, kann zum Aufheizen ein z.B. induktives Verfahren verwendet werden. Der Eintrag von thermischer Energie in die Defektbereiche des Prüfgegenstandes kann auch mit Hilfe von Ultraschall erfolgen.

Innerhalb einer Wärmeausbreitungsphase wird eine Folge mit zwei oder mehr Thermografiebildern erfasst, wobei diese mit zeitlichem Abstand zueinander erfasst werden. Die Wärmeausbreitungsphase beginnt, wenn sich der Wärmefluss vom lokal aufgeheizten Defektbereich in die Umgebung bemerkbar macht. Die Wärmeausbreitungsphase reicht in die dem Aufheizen folgende Abkühlphase hinein und entspricht in vielen Fällen der Abkühlphase. Eine strikte Grenze zwischen Aufheizphase und Abkühlphase existiert jedoch häufig nicht. Der Beginn der Wärmeausbreitungsphase kann zeitlich noch mit der Phase der lokalen Aufheizung überlappen, da sich Wärmeenergie schon während des Aufheizens ausbreiten kann.

Jedes der Thermografiebilder repräsentiert dabei eine örtliche Temperaturverteilung in einem von dem Thermografiebild erfassten Oberflächenbereich des Prüfgegenstandes zu unterschiedlichen Zeitpunkten während der Wärmeausbreitung. Wenn die zum Erfassen der Thermografiebilder vorgesehene Erfassungseinrichtung, beispielsweise eine Wärmebildkamera, und der Prüfgegenstand ruhen, so können die zu unterschiedlichen Zeitpunkten erfassten Oberflächenbereiche des Prüfgegenstandes identisch sein. Bei einer Relativbewegung zwischen Prüfgegenstand und Erfassungseinrichtung können die Oberflächenbereiche räumlich versetzt zueinander liegen.

Aus den Thermografiebildern einer Folge werden positionsrichtig zugeordnete Temperaturprofile ermittelt, wobei jedes der zueinander positionsrichtig zugeordneten Temperaturprofile demselben Messbereich der Oberfläche des Prüfgegenstandes zugeordnet ist. Der Begriff "Messbereich" bezieht sich hier auf eindimensional oder zweidimensional ausgedehnten Bereich, der im Koordinatensystem des Prüfgegenstandes eine feste Position hat. Im Messbereich liegen viele Messpositionen.

Der Begriff "Temperaturprofil" bezeichnet ein ortsauflösendes Profil, bei dem unterschiedlichen Orten bzw. Positionen innerhalb des Temperaturprofils jeweils Werte einer Messgröße zugeordnet sind, die die Temperatur am jeweiligen Ort repräsentieren. Das Temperaturprofil kann als Ortsfunktion verstanden werden, die die Abhängigkeit des Temperaturwertes vom Ort innerhalb des Temperaturprofils beschreibt. Ein Temperaturprofil kann sich nach Art eines Linienprofils auf einen mehr oder weniger schmalen, quasi linienhaften Bereich beziehen. Es kann sich auch um ein 2D-Profil bzw. Flächenprofil handeln, wobei dann die Ortsverteilung von Temperaturwerten in einem Flächenstück vorgegebener Form und Größe durch das Temperaturprofil beschrieben wird. Die den unterschiedlichen Orten des Temperaturprofils zugeordnete Messgröße kann als "Temperaturwert" bezeichnet werden. Dabei wird in der Regel nicht die Temperatur direkt gemessen, sondern beispielsweise die Intensität bzw. Amplitude der vom jeweiligen Ort emittierten Wärmestrahlung, die mit den in der Thermografie üblichen Mitteln in eine lokale Temperatur eines Profilortes umgerechnet werden kann.

Auf diese Weise werden mehrere (mindestens zwei) Temperaturprofile ermittelt, die den örtlichen Temperaturverlauf innerhalb desselben Messbereichs zu unterschiedlichen Zeitpunkten während der Abkühlung repräsentieren. Die zeitlichen Verläufe von Temperaturwerten aus den Temperaturprofilen für eine Vielzahl von durch die Temperaturprofile erfassten Messpositionen des Messbereichs werden dann quantitativ ermittelt, so dass man für eine Vielzahl von Messpositionen des Messbereichs die zeitliche Entwicklung der lokalen Temperaturwerte erhält. Die zeitlichen Verläufe werden dann nach mindestens einem Auswertekriterium ausgewertet, welches geeignet ist, den Wärmefluss in dem Messbereich zu charakterisieren.

Bei dem Verfahren werden nicht nur die Temperaturprofile hinsichtlich des durch sie repräsentierten örtlichen Temperaturverlaufs analysiert, sondern auch deren zeitliche Veränderung. Man erhält eine Sequenz bzw. eine Folge von Temperaturprofilen für einen definierten Messbereich an der Oberfläche und einen definierten Zeitbereich. Ein wesentlicher Aspekt des Verfahrens ist die Einbeziehung des Wärmeflusses, also der Dynamik der zeitlichen Entwicklung des Temperaturprofils und dessen Auswertung bzw. Interpretation.

Gemäß einer anderen Formulierung wird somit die Verwendung einer Variante der ortsauflösenden Wärmeflussthermografie zur Detektion und zur Identifizierung von oberflächennahen Defekten in geeigneten Prüfgegenständen vorgeschlagen, wobei die zeitliche Entwicklung der an der Prüflingsoberfläche feststellbaren örtlichen Verteilung der Temperatur ermittelt und ausgewertet wird. Dabei wird u.a. der laterale Wärmefluss quantitativ erfasst und bewertet.

Im Vergleich zum Stand der Technik ergibt sich eine wesentlich zuverlässigere Klassifikation von Defekten z.B. als Riss oder Gefügestörung, da das Verfahren eine verbesserte Trennung von auf Defekte zurückgehenden Temperatureffekten und nicht wärmeflussbedingten Effekten erlaubt. Weiterhin ergibt sich eine verbesserte Auswertbarkeit der thermografischen Informationen auch bei geringen Signalamplituden, da nicht alleine die Amplitude bzw. die Intensität der Temperatursignale in den Profilen entscheidet, sondern auch deren Dynamik auf der Zeitachse. Dadurch ergibt sich auch eine erheblich verbesserte Störunterdrückung selbst dann, wenn die (nicht auf die gesuchten Defekte zurückgehende) Störamplitude höher als die Nutzsignalamplitude ist, wobei die Nutzsignalamplitude hier die durch Gefügestörungen hervorgerufene Signalamplitude bezeichnet.

Das Prüfverfahren erlaubt es insbesondere, die raum-zeitliche Wärmeausbreitung nach plötzlicher, lokaler begrenzter Wärmezufuhr zu erfassen und quantitativ auszuwerten. Die raum-zeitliche Wärmeausbreitung erfolgt vereinfacht dargestellt so, dass die im Bereich eines potentiellen Defekts konzentrierte Wärme mit der Zeit in benachbarte, kühlere Bereiche des Prüfgegenstandsmaterials abfließt. Das Abfließen zeigt sich an einer lateralen Oberflächentemperaturverteilung insofern, als ein Temperaturprofil an der Anregungsstelle mit der Zeit an Amplitude abnimmt, dabei aber eine Temperaturzunahme in unmittelbarer Nachbarschaft der Anregungsposition zu verzeichnen ist. Daraus ergibt sich, dass die Form der Temperaturprofile sich unter diesen Bedingungen in einer charakteristischen Art und Weise mit der Zeit ändert. Die häufigsten Störeinflüsse, beispielsweise Oberflächenreflexionen, unterliegen dagegen keiner bzw. nur einer geringen zeitlichen Änderung bezüglich ihrer örtlichen Eigenschaften und/oder zeigen eine vom typischen Wärmeflussverhalten deutlich abweichende zeitliche Änderung (z.B. kurzes Aufblitzen eines Reflexes). Derartige Störeinflüsse können also anhand ihres typischen raum-zeitlichen Verhaltens eindeutig von realen Defekten unterschieden werden. Manche Störeinflüsse machen sich zwar im Temperaturprofil mit einer raum-zeitlichen Dynamik bemerkbar, diese unterscheidet sich jedoch in der Regel deutlich von der raum-zeitlichen Wärmeausbreitung, die in der Umgebung eines Defektes innerhalb eines ungestörten wärmeleitfähigen Materials stattfindet. Daher bietet eine Auswertung, die das raum-zeitliche Verhalten von Temperaturprofilen unter dem Blickwinkel der Gesetze der Wärmeausbreitung bzw. Wärmediffusion in einem Festkörper analysiert, gegenüber herkömmlichen Verfahren weit verbesserte Trennschärfe und Störungsunterdrückung.

Die Auswertung kann daher auch so beschrieben werden, dass bei der Auswertung ein Vergleich der aufgenommenen Thermografiedaten mit einer Signatur stattfindet, wobei die Signatur eine Beschreibung der räumlichen und zeitlichen Wärmeausbreitung in einem Festkörper ist, die speziell nach einer lokalen Wärmekonzentration bestrebt ist, das thermische Gleichgewicht wieder herzustellen.

Die Temperaturprofile werden vorzugsweise in einem vorbereitenden Auswerteschritt automatisch daraufhin analysiert, ob sich im Temperaturprofil defektähnliche Auffälligkeiten zeigen, also solche Auffälligkeiten, die auf einen Defekt zurückgehen könnten, aber nicht unbedingt müssen. Bei der Identifizierung von defektähnlichen Auffälligkeiten wird gemäß der beanspruchten Erfindung ein lokales Maximum der Temperaturwerte innerhalb der Temperaturprofile gesucht. Ein lokales Maximum entspricht hierbei einem Ort innerhalb eines Temperaturprofils, dessen Temperatur eindeutig höher ist als die Temperatur an Profilorten in der unmittelbaren Umgebung des lokalen Maximums. Durch den Identifizierungsschritt sollen z.B. bei der Rissprüfung im Wesentlichen schmale heiße Stellen in einer ansonsten kühleren Umgebung aufgefunden werden. Bei diesem Identifizierungsschritt können geeignete Filterroutinen der Bildverarbeitung genutzt werden, um beispielsweise ein lokales Maximum von Kantenorten zu unterscheiden, an denen die Temperatur von der einen Umgebungsseite zur anderen Umgebungsseite über kurze Distanz quasi sprunghaft oder stufenartig zunimmt oder abnimmt. In der Regel werden hierzu zwei oder mehr nach unterschiedlichen Kriterien arbeitende Filterroutinen eingesetzt, um diejenigen Bildorte (Pixel oder Pixelgruppen) zu identifizieren, die eindeutig einem lokalen Temperaturmaximum zuzuordnen sind.

Die Auswertung kann sich dann auf diejenigen Bereiche konzentrieren, in denen lokale Temperaturmaxima gefunden wurden.

Gemäß der beanspruchten Erfindung wird bei der Auswertung ein Wärmemengenkonzentrationswert im Bereich eines lokalen Maximums der Temperaturwerte innerhalb eines Temperaturprofils ermittelt und der zeitliche Verlauf des Wärmemengenkonzentrationswerts ausgewertet. Der Wärmemengenkonzentrationswert ist ein Maß für die Wärmemengenrelation des lokalen Maximums im Vergleich zur näheren Umgebung. Sinkt diese Wärmemengenkonzentration mit der Zeit, so fließt Wärme in die Umgebung ab, wie das beispielsweise in der Umgebung von Rissen typisch ist. Geht dagegen das lokale Maximum nicht auf eine Gefügestörung oder ein Riss zurück, zeigt der Wärmekonzentrationswert häufig ein signifikant anderes Verhalten, wobei beispielsweise die Wärmekonzentration nach Beendigung der Aufheizung sogar zunächst noch zunehmen kann. Dies deutet dann darauf hin, dass das lokale Temperaturmaximum nicht auf einen Riss o.dgl. zurückgeht.

Zusätzlich zur Auswertung des Wärmemengenkonzentrationswert kann als Auswertekriterium der zeitliche Verlauf der Amplitude eines Temperaturwertes im Bereich eines lokalen Maximums der Temperaturwerte eines Temperaturprofils ausgewertet werden. Daraus kann z.B. die Abkühlrate im Bereich des lokalen Maximums und in dessen Nähe bestimmt werden. Es hat sich gezeigt, dass Abkühlraten im Bereich von Gefügestörungen wie Rissen innerhalb einer ansonsten ungestörten Umgebung durch Gesetze der Wärmediffusion gut beschreibbar sind und dadurch als zuverlässiges Bewertungskriterium genutzt werden können. Risse und andere Defekte können daher häufig allein aufgrund der typischen Abkühlraten von nicht auf Defekte zurückgehenden Störungen unterschieden werden.

Um für die Auswertung der zeitlichen Verläufe über berechnete Kenngrößen mit ausreichender Genauigkeit entsprechende Zeitfunktionen ermitteln zu können, werden bei bevorzugten Ausführungsformen mindestens drei zeitlich aufeinanderfolgend aufgenommene Temperaturprofile gemeinsam ausgewertet, um eine geeignete Anzahl von Stützstellen zu erhalten. In der Regel werden zwischen vier und zehn Temperaturprofile gemeinsam ausgewertet, so dass eine ausreichende Anzahl von Stützstellen in der Zeitdomäne vorliegt und eine zuverlässige Unterscheidung zwischen Defekten und Artefakten getroffen werden kann.

Alternativ oder zusätzlich zur Ermittlung und Auswertung von Kenngrö-ßen aus Zeitfunktionen ist es auch möglich, die zeitlichen Verläufe von Temperaturwerten innerhalb der Temperaturprofile auf der Basis von Bildelementen (Pixeln) oder Gruppen von Bildelementen (Pixelgruppen) vorzunehmen. Die Ergebnisse werden dann zueinander in Relation gesetzt, um zu raum-zeitlichen Signaturen zu kommen. Allgemein kann jede Variante der Signalauswertung angewendet werden, die Maßzahlen bzw. -daten für einen Vergleich der Signaleigenschaften mit den theoretischen Grundlagen der Wärmeausbreitung im Festkörper zulässt. Beispielsweise können raum-zeitliche Linienprofile, Aufnahmesequenzen, Flächenstücke, beliebige Pixelanordnungen bzw. Pixelmuster genutzt werden. Wesentlich ist die gemeinsame Betrachtung bzw. Einbeziehung der räumlichen und der zeitlichen Aspekte, ohne die eine zuverlässige Aussage über Defektwahrscheinlichkeiten kaum möglich ist.

Es ist möglich, das Prüfverfahren bei Prüfvorrichtungen anzuwenden, bei denen sowohl der Prüfgegenstand als auch die Erfassungseinrichtung zur Erfassung von Thermografiebildern ruhen. Dadurch vereinfacht sich die positionsrichtige Zuordnung der Temperaturprofile zueinander erheblich, da derselbe Messbereich in zeitlich aufeinanderfolgend aufgenommenen Thermografiebildern jeweils demselben Bildbereich (gleiche Bildkoordinaten) in den Thermografiebildern entspricht.

Bei bevorzugten Anwendungsfällen wird das Prüfverfahren jedoch zur Prüfung von langgestreckten Prüfgegenständen, wie z.B. Stäben, Rohren, Draht o. dgl. verwendet. Zur Prüfung von langgestreckten Prüfgegenständen kann eine Relativbewegung zwischen dem Prüfgegenstand und einer Erfassungseinrichtung zur Erfassung der Thermografiebilder parallel zu einer Bewegungsrichtung erzeugt werden, die zweckmäßig parallel zur Längsrichtung des langgestreckten Prüfgegenstandes verläuft. Vorzugsweise ruht dabei die Erfassungseinrichtung, während der Prüfgegenstand relativ zur Erfassungseinrichtung bewegt wird. Die Relativbewegung wird derart erzeugt, dass die Oberflächenbereiche, die jeweils mit den zeitlich aufeinanderfolgend erfassten Thermografiebildern erfasst wurden, um eine bestimmte Wegstrecke parallel zur Bewegungsrichtung versetzt angeordnet sind. Vorzugsweise überlappen sich dabei die zeitlich unmittelbar nacheinander erfassten Oberflächenbereiche teilweise derart, dass jeder Ort der Prüfungsoberfläche durch zwei oder mehr Thermografiebilder erfasst wird. Hierdurch ist eine lückenlose Oberflächenprüfung von in Längsrichtung bewegten langgestreckten Prüfgegenständen möglich. Vorzugsweise taucht jeder Ort der Prüflingsoberfläche in drei oder mehr Thermografiebildern auf, beispielsweise in vier bis zwanzig oder mehr Thermografiebildern, wobei der Ort aufgrund der Relativbewegung in jedem der Thermografiebilder an einer anderen Stelle (Bildposition) liegt.

Die positionsrichtige Zuordnung von Temperaturprofilen unterschiedlicher Thermografiebilder stellt bei der Prüfung von bewegten Prüfgegenständen eine besondere Herausforderung dar. Bei einer Verfahrensvariante wird ein zu einem ersten Zeitpunkt erfasstes erstes Thermografiebild einer Serie von Thermografiebildern durch Bildverarbeitung analysiert, um mindestens einen ersten ausgewählten Bildausschnitt zu identifizieren, der Thermografiedaten eines ersten Oberflächenausschnitts mit einer defektähnlichen Auffälligkeit enthält. Der identische Oberflächenausschnitt wird dann in einem zum ersten Bildausschnitt korrespondierenden zweiten Bildausschnitt automatisch aufgefunden, Der zweite Bildausschnitt befindet sich in einem mit zeitlichem Abstand zum ersten Thermografiebild zu einem späteren zweiten Zeitpunkt erfassten zweiten Thermografiebild. Dann findet eine gemeinsame Auswertung der Thermografiedaten des ersten und des zweiten Bildausschnittes statt, um die positionsrichtige Zuordnung zu erreichen.

Zum automatischen Auffinden wird vorzugsweise eine erwartete Position des die defektähnliche Auffälligkeit enthaltenden Oberflächenausschnitts im zweiten Thermografiebild auf Basis einer gemessenen oder auf andere Weise bekannten Relativgeschwindigkeit zwischen dem Prüfgegenstand und der Erfassungseinrichtung und dem zwischen dem ersten Zeitpunkt und dem zweiten Zeitpunkt verstrichenen Zeitintervall ermittelt, um denjenigen Weg zu ermitteln, den der Oberflächenausschnitt zwischen dem ersten Zeitpunkt und dem zweiten Zeitpunkt in Bewegungsrichtung zurückgelegt hat. Dadurch kann sich die Auswertung des zweiten Thermografiebildes von Anfang an auf denjenigen Oberflächenausschnitt konzentrieren, in welchem bei der Analyse des zeitlich früher erfassten ersten Thermografiebildes eine defektähnliche Auffälligkeit gefunden wurde.

Zum Auffinden der defektähnlichen Auffälligkeit wird vorzugsweise ein lokales Maximum der Temperaturwerte innerhalb mindestens eines linienartigen oder flächigen Temperaturprofils im ersten Thermografiebild gesucht. Hierzu können geeignete Filterroutinen der Bildverarbeitung eingesetzt werden.

Die Erfindung bezieht sich auch auf eine zur Durchführung des Verfahrens eingerichtete thermografische Prüfvorrichtung zur ortsauflösenden Detektion und Identifikation von oberflächennahen Defekten in einem Prüfgegenstand. Die Prüfvorrichtung umfasst:
eine Heizeinrichtung zum Aufheizen eines Abschnitts des Prüfgegenstandes derart, dass sich ein thermisches Ungleichgewicht zwischen mit Defekten behafteten Defektbereichen und defektfreiem Prüflingsmaterial einstellt;
mindestens eine Erfassungseinrichtung zum Erfassen einer Folge von mindestens zwei mit zeitlichem Abstand aufeinanderfolgenden Thermografiebildern; und
eine Auswerteeinrichtung zum Auswerten von Thermografiedaten der Thermografiebilder,
wobei die Auswerteeinrichtung zum Ermitteln von positionsrichtig zugeordneten Temperaturprofilen aus den Thermografiebildern, zum Ermitteln von zeitlichen Verläufen von Temperaturwerten aus den Temperaturprofilen für eine Vielzahl von durch die Temperaturprofile erfassten Messpositionen des Messbereichs, und zum Auswerten der zeitlichen Verläufe nach mindestens einem den Wärmefluss in dem Messbereich charakterisierenden Auswertekriterium konfiguriert ist. Die Prüfvorrichtung ist zur Durchführung des erfindungsgemäßen Verfahrens konfiguriert.

Vorzugsweise ist die Erfassungseinrichtung eine wärmestrahlungssensitive Flächenkamera mit einer Vielzahl von Bildzeilen, deren Bildinformation gemeinsam ausgewertet wird.

Diese und weitere Merkmale gehen außer den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können. Ausführungsbeispiele sind in den Zeichnungen dargestellt und werden im Folgenden näher erläutert.

### KURZBESCHREIBUNG DER ZEICHNUNGEN

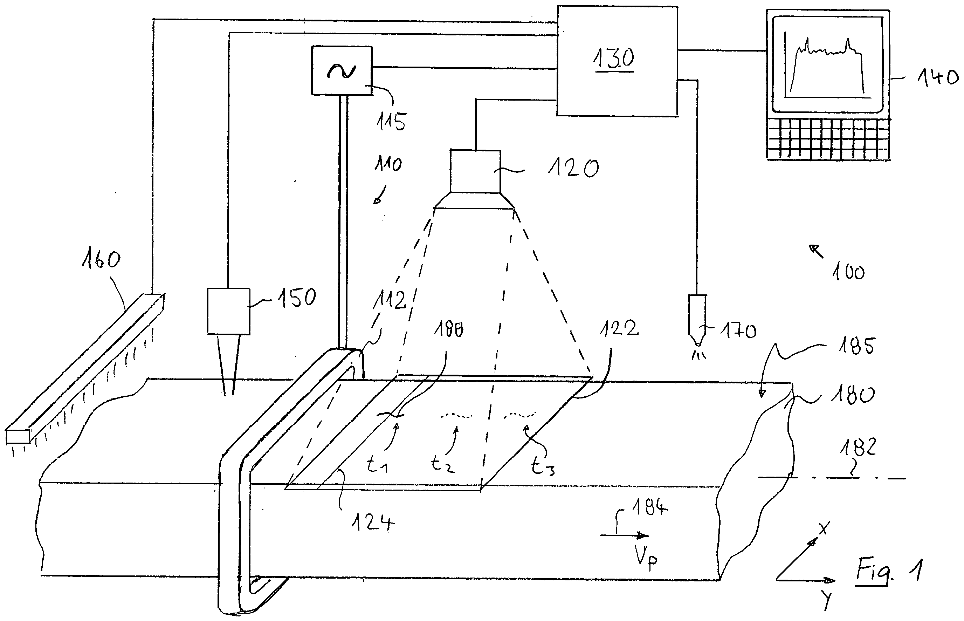

- Fig. 1: zeigt eine Ausführungsform einer Prüfvorrichtung zur thermografischen Prüfung von langgestreckten Prüfgegenständen aus elektrisch leitfähigem Material im Durchlaufverfahren;

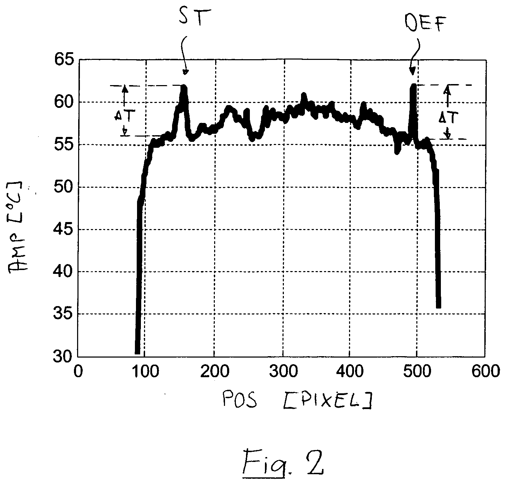

- Fig. 2: zeigt ein Beispiel eines senkrecht zur Bewegungsrichtung des Prüfgegenstandes aufgenommenen Temperaturprofils;

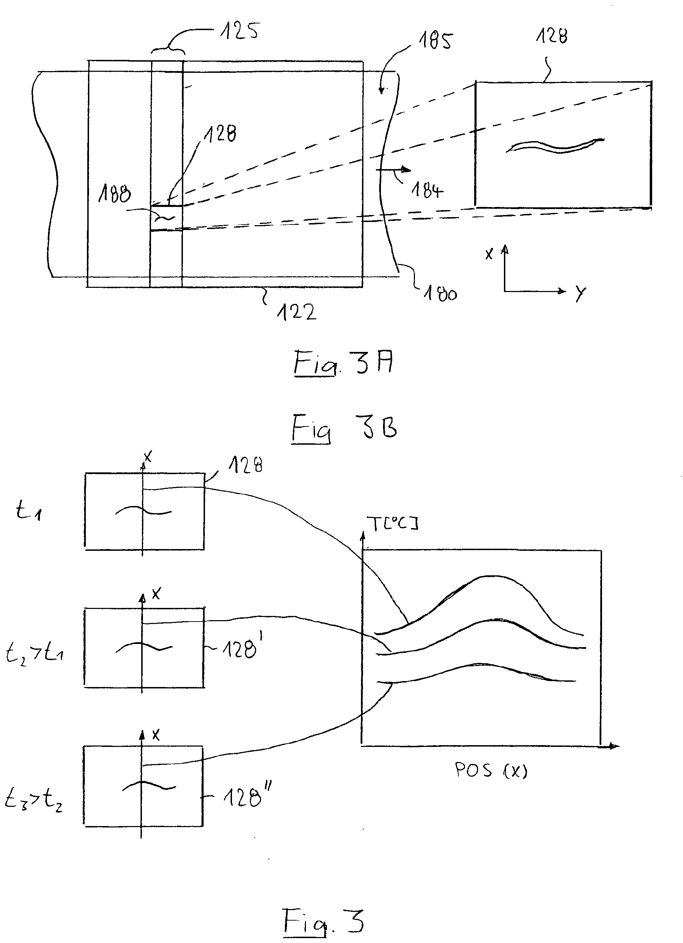

- Fig. 3: zeigt in 3A eine schematische Draufsicht auf einen im Erfassungsbereich einer Wärmebildkamera liegenden aufgeheizten Abschnitt des bewegten Prüfgegenstandes mit einem auch vergrößert dargestellten ausgewählten Bildausschnitt, der einen Defekt enthält, und in 3B eine Erläuterung eines Verfahrens zur positionsrichtigen gemeinsamen Auswertung von zu unterschiedlichen Zeitpunkten am gleichen Oberflächenausschnitt erfassten Temperaturprofilen;

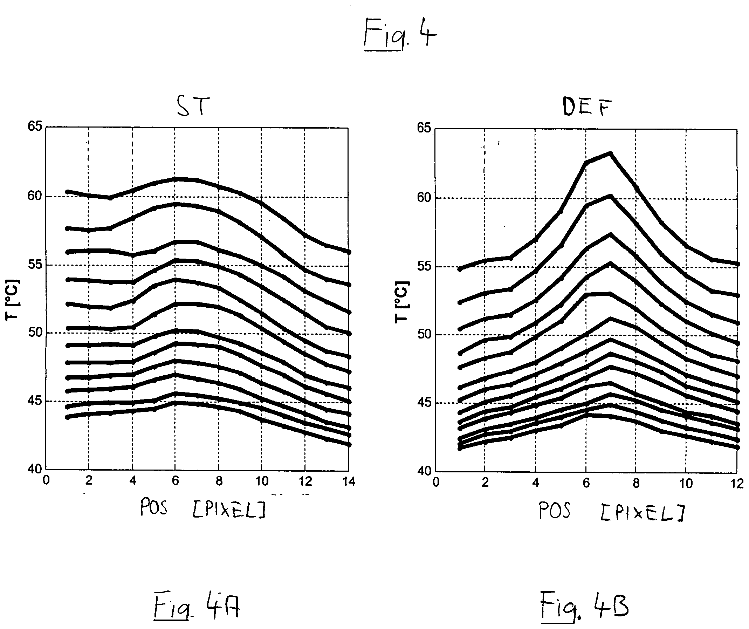

- Fig. 4: zeigt in 4A und 4B jeweils die zeitliche Entwicklung von Teilen eines Temperaturprofils im Bereich eines lokalen Temperaturmaximums der Temperatur, wobei in 4A die positionsrichtig zugeordnete Ausschnitte von Temperaturprofilen im Bereich einer nicht auf einen Riss zurückgehenden Störung und in Fig. 4B entsprechende Temperaturprofile im Bereich eines oberflächennahen Risses gezeigt sind;

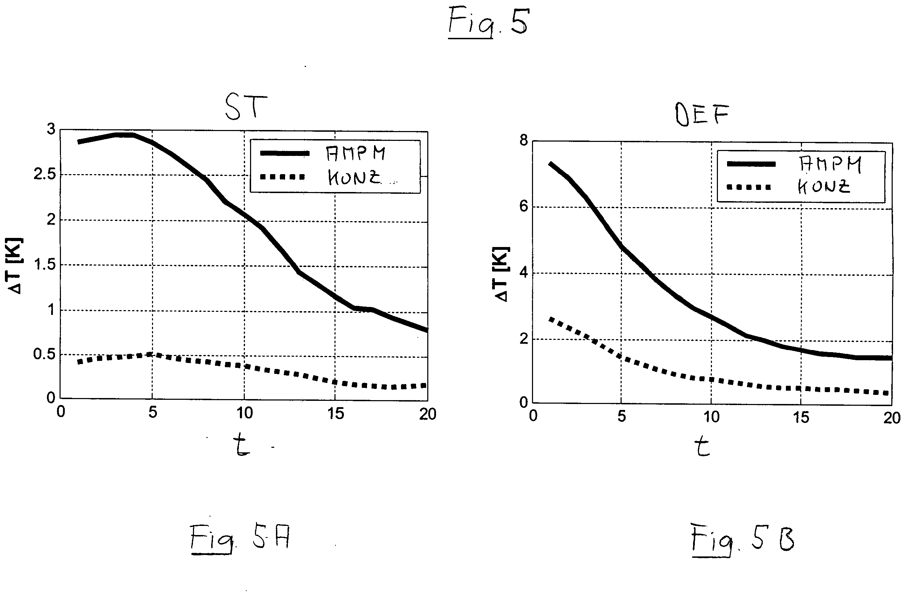

- Fig. 5: zeigt in Fig. 5A und 5B jeweils die zeitlichen Verläufe von zwei den Wärmefluss im Bereich des lokalen Temperaturmaximums charakterisierenden Kenngrößen, wobei in Fig. 5A die Zeitverläufe der Kenngrößen für eine nicht auf einen Riss zurückzuführende Störung und in Fig. 5B die entsprechenden Zeitverläufe für einen oberflächennahen Risses dargestellt sind; und

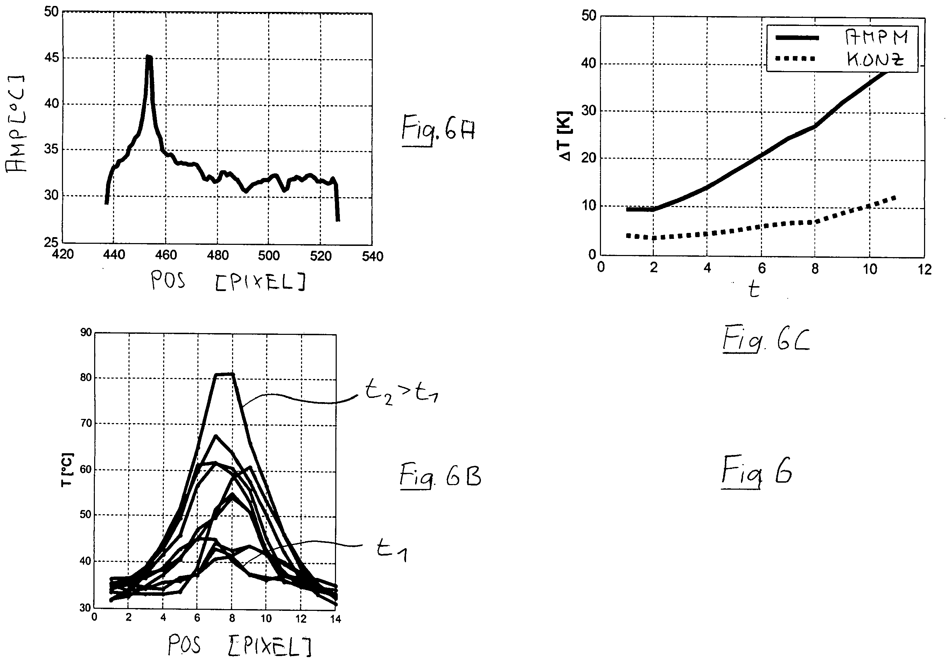

- Fig. 6: zeigt in 6A einen Ausschnitt aus einem Temperaturprofil mit einem auf eine Reflexion zurückgehenden lokalen Temperaturmaximum, in Fig. 6B die zeitliche Entwicklung des örtlichen Temperaturverlaufs im Bereich des in Fig. 6A gezeigten lokalen Temperaturmaximums und in 6C die zeitliche Entwicklung von zwei den Wärmefluss im Bereich des lokalen Maximums charakterisierenden Kenngrößen.

### DETAILLIERTE BESCHREIBUNG DER BEVORZUGTEN AUSFÜHRUNGSFORMEN

Fig. 1 zeigt eine schematische Darstellung einer Ausführungsform einer thermografischen Prüfvorrichtung 100 zur lückenlosen Oberflächenprüfung von langgestreckten Prüfgegenständen aus elektrisch leitfähigem Material im Durchlaufverfahren. Der Prüfgegenstand 180 ist im Beispielsfall ein Stahlknüppel mit Rechteckquerschnitt, der von einer nicht dargestellten Walzeinrichtung kommt und mit Hilfe einer nicht dargestellten Fördereinrichtung, beispielsweise einem Rollenförderer, mit einer weitgehend konstanten Durchlaufgeschwindigkeit v_{P} aus dem Bereich zwischen ca. 0,1 m/s und 1,5 m/s in einer parallel zu seiner Längsachse 182 verlaufenden Bewegungsrichtung 184 (Pfeil) gefördert wird. Der Stahlknüppel hat nach dem Warmwalzen keine blanke, sondern eine sogenannte "schwarze" Oberfläche, deren Oberflächentemperatur typischerweise zwischen 0°C und 50°C liegt. Die thermografische Prüfung und die Auswertung der dabei erfassten Thermografiedaten werden anhand der Prüfung der makroskopisch ebenen Prüflingsoberfläche 185 erläutert. Entsprechende Prüfungen werden auch für die anderen drei Oberflächen des Prüfgegenstandes zeitgleich durchgeführt.

Die Prüfvorrichtung hat eine induktive Heizeinrichtung 110 zum Aufheizen von in den Wirkbereich der Heizeinrichtung eintretenden Abschnitts des Prüfgegenstandes in der Weise, dass sich ein thermisches Ungleichgewicht zwischen mit Defekten behafteten Defektbereichen und defektfreiem Prüfgegenstandsmaterial einstellt. Zu der Heizeinrichtung gehört eine Induktionsspule 112, die als ebene Durchlaufspule für den Prüfgegenstand mit einer senkrecht zur Durchlaufrichtung ausgerichteten Spulenebene ausgelegt ist. Die Induktionsspule ist elektrisch an einen Wechselspannungsgenerator 115 angeschlossen, der zur Ansteuerung an eine zentrale Steuereinrichtung 130 der Prüfvorrichtung angeschlossen ist. Bei Erregung der Induktionsspule 112 mit Wechselspannung geeigneter Frequenz werden in oberflächennahen Bereichen des Prüfgegenstandes Wirbelströme induziert, die die oberflächennahen Bereiche beim Durchlaufen durch die Induktionsspule auf Temperaturen über Umgebungstemperatur aufheizen können. Die Aufheizung ist in defektfreien Oberflächenbereichen normalerweise relativ gleichmäßig. Liegen jedoch im Querschnitt des induzierten Stromflusses Gefügestörungen wie Risse, Schnitte, Lunker oder dergleichen vor, so wirken diese als elektrische Widerstände und lenken den Stromfluss um. Dies führt zu höheren Stromdichten und damit zu höherer Verlustleistung an den Engstellen des Stromflusses. Diese Verlustleistung an den Gefügestörungen macht sich durch eine zusätzliche Wärmeerzeugung bemerkbar, so dass der betroffene, lokal begrenzte Defektbereich unmittelbar an der Gefügestörung eine im Vergleich zur störungsfreien Umgebung höhere Temperatur hat. Es kommt also zu einer lokalen Aufheizung gegenüber dem niedrigeren Temperaturniveau der weiter entfernten Umgebung. Typische Temperaturdifferenzen zwischen dem Bereich eines Risses und der unmittelbar angrenzenden ungestörten Materialumgebung liegen häufig in der Größenordnung zwischen ca. 1K bis 10K. Diese lokalen Temperaturerhöhungen und deren raum-zeitliche Entwicklung werden bei dem Prüfverfahren zur ortsauflösenden Detektion und Identifikation von oberflächenahen Defekten benutzt.

Im Beispielsfall hat der Generator eine elektrische Leistung von bis zu 150 kW und werden Wechselspannungsfrequenzen aus dem Bereich zwischen 10 kHz und 350kHz verwendet. Heizeinrichtungen mit anderen Spezifikationen sind ebenfalls möglich. Beispielsweise kann der Wechselspannungsgenerator mit Leistungen bis zu mehreren MW betrieben werden, was z.B. bei Prüfgegenständen mit größeren Abmessungen (z.B. mehr als 800mm Durchmesser) vorteilhaft sein kann. Der Frequenzbereich kann der Messaufgabe angepasst werden. Beispielsweise können Frequenzen bis zu 1 MHz nützlich sein, um besonders kleine oberflächennahe Fehler zu finden, da mit steigender Frequenz die Eindringtiefe des Wirbelstroms geringer wird und somit das Messvolumen abnimmt. Höhere Frequenzen sind auch bei der Prüfung von elektrisch leitenden Stählen mit hohem elektrischen Widerstand und magnetischer Permeabilität nahe 1 von Vorteil, um eine schnelle lokale Aufheizung von Defektbereichen gegenüber ihrer Umgebung zu erreichen.

Durch die Heizeinrichtung wird das Gesamtsystem Prüfgegenstand/Defekt in ein thermisches Ungleichgewicht gebracht. Mit Hilfe des Prüfverfahrens und der Prüfvorrichtung ist es möglich, sowohl im Ortsraum als auch in der Zeitdomäne zu beobachten, auf welche Weise das System dem thermischen Gleichgewichtszustand entgegenstrebt.

Hierzu hat die Prüfvorrichtung eine für Wärmestrahlung empfindliche, ortsauflösende Erfassungseinrichtung 120 zum Erfassen von zweidimensionalen Thermografiebildern, die mit einer hohen Bildfrequenz von bis zu 100 Bildern pro Sekunde (frames per second) aufgenommen werden können. Die im Folgenden auch als "Thermokamera" bezeichnete Erfassungseinrichtung ist zur Steuerung der Bildaufnahme und zur Übernahme und Auswertung der in den Thermografiebildern erhaltenen Thermografiedaten an die zentrale Steuereinrichtung 130 angeschlossen. In diese ist ein computerbasiertes Bildverarbeitungssystem integriert, das dazu eingerichtet ist, die aus den Thermografiebildern ermittelten Thermografiedaten nach unterschiedlichen Kriterien auszuwerten. Eine solche Thermokamera kann auf Basis von lokalen Temperaturwerten bzw. auf Basis der lokal emittierten Wärmestrahlung die Anwesenheit und einige Eigenschaften von Gefügestörungen visualisieren und es können diese Auffälligkeiten mit Hilfe geeigneter Mittel der Bildverarbeitung in einem zugehörigen Auswertesystem automatisch bewertet werden.

Die Thermokamera 120 ist eine Flächenkamera und hat einen rechteckförmigen Erfassungsbereich 122, der hier auch als Bildfeld 122 bezeichnet wird und der im Beispielsfall die gesamte Breite der ihm zugewandten Prüflingsoberfläche 185 bis über die seitlichen Kanten hinaus abdeckt. Die Thermokamera 120 deckt im Beispielsfall ein Bildfeld 122 der Größe 270 mm x 216 mm mit einer Auflösung von 640 x 512 Pixeln (Bildelementen) ab. Ein Bildelement (Pixel) korrespondiert dabei mit einem relativ kleinen rechteckigen Oberflächenausschnitt von 0,5 mm bis 0,8 mm Durchmesser auf der Prüflingsoberfläche 185. Ein mit der Flächenkamera aufgenommenes Thermografiebild besteht aus einer Vielzahl von im Wesentlichen senkrecht zur Längsrichtung des Prüfgegenstandes (y-Richtung) verlaufenden Zeilen und im Wesentlichen parallel zur Längsrichtung (d.h. in y-Richtung) verlaufenden Spalten. Die Thermografiebilder werden zeilenweise ausgewertet, um insbesondere Längsfehler zuverlässig zu detektieren. Ein zu einer Zeile der Thermokamera gehörender linienhaft schmaler Messbereich 124 verläuft quer zu einem Defekt 188. Dieser Messbereich wird anschaulich auch als Messlinie bezeichnet.

Zu dem in Fig. 1 dargestellten Zeitpunkt t₁ befindet sich der oberflächennahe Defekt 188 in Form eines mehr oder weniger parallel zur Längsrichtung des Prüfgegenstandes verlaufenden Längsrisses in der Nähe der der Induktionsspule 112 zugewandten Eingangsseite des Erfassungsbereiches. Die Positionen desselben Längsrisses zu späteren Zeitpunkten t₂>t₁ und t₃>t₂ sind gestrichelt dargestellt um zu veranschaulichen, dass ein und derselbe Defekt bzw. ein und derselbe Oberflächenausschnitt sich zu unterschiedlichen Zeitpunkten im Erfassungsbereich 122 der Thermokamera befinden kann, wobei jedoch die Bildpositionen innerhalb des Thermografiebildes in Abhängigkeit von der Durchlaufgeschwindigkeit v_{P} und dem zeitlichen Abstand zwischen den Aufnahmezeitpunkten der mit zeitlichem Abstand aufeinanderfolgenden Thermografiebildern jeweils in Bewegungsrichtung 184 um eine gewisse Wegstrecke in Bewegungsrichtung 184 gegeneinander versetzt sind.

Die genutzte Bildaufnahmefrequenz der Thermokamera ist derart an die Durchlaufgeschwindigkeit des Prüfgegenstandes angepasst, dass jeder Oberflächenabschnitt der Prüflingsoberfläche 185 in mehreren Thermografiebildern an unterschiedlicher Stelle auftaucht, beispielsweise in mindestens 5 oder mindestens 10 oder mindestens 15 mit zeitlichem Abstand zueinander aufgenommenen Thermografiebildern.

Eine an die Steuereinrichtung angeschlossene Anzeige- und Bedieneinheit 140 hat einen Bildschirm, an dem aus den Thermografiebildern ermittelte Daten und Zusammenhänge angezeigt werden können. Mit Hilfe einer Tastatur und/oder anderer Eingabemittel kann die Prüfvorrichtung durch einen Bediener bequem für unterschiedliche Prüfaufgaben eingerichtet und bedient werden.

An die Steuereinrichtung 130 ist weiterhin eine Geschwindigkeitsmesseinrichtung 150 zur Ermittlung der aktuellen Bewegungsgeschwindigkeit v_{P} des Prüfgegenstandes angeschlossen. Diese als Weggeber dienende Einrichtung arbeitet im Beispielsfall mit Hilfe von Laserstrahlung berührungslos. Bei anderen Ausführungsformen kann ein taktiler Weggeber, beispielsweise mit einem an einer Prüflingsoberfläche abrollenden Messrad, vorgesehen sein.

Die Präzision des thermografischen Prüfverfahrens kann durch Emissionsgradschwankungen der thermografisch erfassten Prüflingsoberfläche stark beeinflusst werden. Um negative Einflüsse hierdurch so gering wie möglich zu halten, wird eine aktive Homogenisierung des Emissionsgrads der gemessenen Prüflingsoberfläche vorgenommen, indem die Prüflingsoberfläche mit Hilfe einer Benetzungseinrichtung 160 vor dem Durchtritt durch die Induktionsspule gleichmäßig mit einer Flüssigkeit, z.B. mit Wasser, benetzt wird. Diese Technik hat sich bei Oberflächentemperaturen von bis zu 50°C als wirksam erwiesen, um das Auftreten von Pseudoanzeigen, die auf lokale Schwankungen des Emissionsgrades zurückgehen, weitgehend zu vermeiden.

Wird durch die Prüfvorrichtung eine Auffälligkeit eindeutig als Defekt identifiziert, so kann er mit Hilfe einer an die Steuereinrichtung 130 angeschlossenen automatischen Markierungseinrichtung 170 durch Aufsprühen von Farbe oder dergleichen markiert werden, so dass eine eventuelle Nachbearbeitung der gestörten Prüflingsoberfläche oder ein Aussortieren zu stark gestörten Abschnitten zielgerichtet möglich ist.

Im Folgenden wird eine bevorzugte Variante eines mit Hilfe der Prüfvorrichtung durchführbaren Prüfverfahrens zur ortsauflösenden Detektion und Identifikation von oberflächennahen Defekten in mit hoher Durchlaufgeschwindigkeit durch die Prüfvorrichtung laufenden Prüfgegenständen beschrieben. Durch die Induktionsspule 112 werden oberflächennahe Bereiche des Prüfgegenstandes induktiv aufgeheizt, wobei sich im Bereich von Rissen und anderen Gefügestörungen lokale Temperaturmaxima einstellen. Nach Durchtritt der entsprechenden Abschnitte des Prüfgegenstandes durch die Induktionsspule kühlen sich diese Bereiche wieder ab. Die Erfassungseinrichtung 120 ist in Bewegungsrichtung unmittelbar hinter der Induktionsspule angebracht und erfasst die Oberflächenbereiche in dieser Abkühlphase.

In einem ersten Verfahrensschritt werden thermische Auffälligkeiten in dem in den Erfassungsbereich 122 hineinbewegten Teil der Prüflingsoberfläche identifiziert. Hierzu werden entsprechende, der Eingangsseite zugeordnete Zeilen ausgewertet, um z.B. ein ortsauflösendes Temperaturprofil (Linienprofil) entlang einer Messlinie 124 senkrecht zur Durchlaufsrichtung zu erhalten. Fig. 2 zeigt beispielhaft ein solches Temperaturprofil. Die Position POS von Messorten innerhalb eines senkrecht zur Bewegungsrichtung (y-Richtung) in x-Richtung verlaufenden linienartigen Messbereichs ist an der Abszisse durch Angabe von Nummern der entsprechenden Pixel (Bildelemente) einer Zeile des Bildfeldes angegeben. Die Ordinate repräsentiert die Amplitude AMP der den Orten zugeordneten Wärmestrahlung und ist im Beispielsfall dargestellt als absolute Oberflächentemperatur in Grad Celsius. Es ist ersichtlich, dass die Oberflächentemperatur zwischen den seitlichen Kanten (etwa bei Pixelnummern 90 bzw. 540) im Bereich zwischen 55 °C und 60 °C liegt und um einige K lokal variiert. Das Temperaturprofil enthält zwei Auffälligkeiten, nämlich ein erstes lokales Temperaturmaximum ST etwa bei Pixel Nr. 150 und ein zweites lokales Temperaturmaximum DEF etwa bei Pixel Nr. 495. Bei beiden lokalen Temperaturmaxima liegt die Differenztemperatur ΔT zur unmittelbaren Umgebung bei etwa 6 bis 7K. Eine später näher erläuterte Auswertung zeigt, dass das erste lokale Temperaturmaximum ST zu einer nicht auf einen Riss oder eine andere Gefügestörung zurückzuführenden Störung zurückgeht, während das zweite Temperaturmaximum DEF tatsächlich durch einen oberflächennahen Riss verursacht wurde. Es ist erkennbar, dass die Größe der Temperaturdifferenz ΔT allein kein zuverlässiges Kriterium für eine Unterscheidung zwischen tatsächlichen Gefügestörungen und anderen, nicht auf Gefügestörungen zurückzuführenden Auffälligkeiten ist.

Jedes Thermografiebild enthält eine Vielzahl solcher in x-Richtung ortsauflösender Temperaturprofile. Das Auftreten von lokalen Temperaturmaxima wird durch die Auswertungssoftware der Bildverarbeitung automatisch erfasst, wobei geeignete Filterroutinen eingesetzt werden, um die Temperaturwerte von Pixeln oder Pixelgruppen innerhalb eines Temperaturprofils mit Temperaturwerten von benachbarten Pixeln oder Pixelgruppen zu vergleichen und anhand des Vergleichs lokale Temperaturmaxima eindeutig als solche zu identifizieren und von anderen Artefakten, beispielsweise dem steilen Abfall der Temperatur an einer Kante, zu unterscheiden. Bei der Filterung arbeitet die Auswertesoftware zeilenweise innerhalb von quer zur Bewegungsrichtung verlaufenden Streifen, die jeweils eine Vielzahl von benachbarten Temperaturprofilen beinhalten. Fig. 3 zeigt einen solchen Streifen 125, der den Defekt 188 enthält. Die Wahrscheinlichkeit für das Vorhandensein eines rissartigen Defektes in Längsrichtung steigt bei dieser Auswertung, wenn bei einer Vielzahl von benachbarten Temperaturprofilen innerhalb des Streifens an etwa der gleichen Pixelposition ein lokales Temperaturmaximum auffälliger Höhe auftritt.

Das Prüfverfahren beruht nicht alleine auf der Auswertung von räumlichen Temperaturprofilen, also solchen Temperaturprofilen, die die örtliche Temperaturverteilung repräsentieren, sondern auch auf der Analyse von deren zeitlicher Veränderung. Diese Kombination wird hier auch als raum-zeitliche Analyse bezeichnet. Hierzu reicht es nicht aus, ein einzelnes Temperaturprofil zu analysieren, sondern es werden für denselben Messbereich der Oberfläche mehrere mit zeitlichem Abstand zueinander aufgenommene Temperaturprofile positionsrichtig miteinander in Beziehung gesetzt, um die raum-zeitliche Dynamik der Entwicklung der Temperaturverteilung analysieren zu können.

Bei der hier beschriebenen Ausführungsform des Prüfverfahrens wird eine besondere Variante einer Mustererkennung genutzt, um eine in einem zeitlich früheren Thermografiebild identifizierte Auffälligkeit, die einen Defekt repräsentieren könnte, in später aufgenommenen Thermografiebildern positionsrichtig wiederzufinden, und dadurch die Möglichkeit zu schaffen, trotz Bewegung des Prüfgegenstandes relativ zur Thermokamera eine zeitliche Folge von mehreren Temperaturprofilen aus demselben Messbereich zu erhalten. Hierzu wird ein zu einem bestimmten Oberflächenausschnitt gehörender Streifen 125 eines zeitlich früh liegenden ersten Thermografiebildes zeilenweise ausgewertet und auf das Vorhandensein von Auffälligkeiten, insbesondere von lokalen Temperaturmaxima, analysiert. Auf Basis der Temperaturdaten der einzelnen Zeilen wird eine zusammenhängende Fläche berechnet, die den Bereich der auffälligen lokalen Temperaturmaxima umschließt. Ein den Defekt 188 umschließender, ausgewählter rechteckiger Bildausschnitt 128 ist in Fig. 3 links innerhalb des Streifens 125 und rechts in vergrö-ßerter Darstellung gezeigt. Die örtlichen Koordinaten des ausgewählten Bildabschnitts 128, d.h. seine Position innerhalb des Thermografiebildes, repräsentiert die Position des zugehörigen, den Defekt 188 enthaltenden Oberflächenabschnitts des Prüfgegenstandes zum Aufnahmezeitpunkt des ersten Thermografiebildes. Die in dem ausgewählten Bildausschnitt enthaltene Bildinformation aus den räumlich zusammenhängenden Pixeln kann in der Bildverarbeitungssoftware als Binary Large Object (BLOB) behandelt werden und repräsentiert ein gewisses Muster von Daten, welches in später aufgenommenen Thermografiebildern wieder aufgefunden werden kann.

Anhand des durch die Datenstruktur repräsentierten "Musters" des Bereichs um den Defekt 188 wird nun in mehreren mit zeitlichen Abständen nachher aufgenommenen späteren Thermografiebildern das gleiche Muster gesucht, um diejenigen Bildausschnitte zu finden, die möglichst positionsgenau demjenigen Oberflächenausschnitt entsprechen, der bei der Analyse des ersten Thermografiebildes zur Berechnung des gesuchten Musters herangezogen wurde. Vorzugsweise werden in mindestens 5 bis 10 aufeinanderfolgend aufgenommenen Thermografiebildern die einem bestimmten Oberflächenausschnitt entsprechenden Bildausschnitte gesucht und deren Bildinformation dann gemeinsam ausgewertet.

Um den Suchbereich in später aufgenommenen Thermografiebildern räumlich zu begrenzen und dadurch die Auswertung zu beschleunigen, wird eine erwartete Position des die defektähnliche Auffälligkeit enthaltenden Oberflächenausschnitts in den später aufgenommenen Thermografiebildern auf Basis der mit Hilfe des Geschwindigkeitsmesssystems 150 gemessenen Bewegungsgeschwindigkeit v_{P} des Prüfgegenstandes, der Bewegungsrichtung 184 und der zwischen den einzelnen Aufnahmezeitpunkten der Thermografiebilder verstrichenen Zeitintervall ermittelt, um daraus jeweils denjenigen Weg zu berechnen, den der interessierende Oberflächenausschnitt zwischen dem der ersten Analyse zugrundeliegenden Zeitpunkt und dem Aufnahmezeitpunkt des jeweils späteren Thermografiebildes zurückgelegt hat. Es hat sich gezeigt, dass auf diese Weise der interessierende Oberflächenabschnitt bzw. die zu diesem Abschnitt gehörenden Daten auch bei leicht schwankender Durchlaufgeschwindigkeit mit einer Genauigkeit im Bereich der Messgenauigkeit des Weggebers (hier z.B. ca. ± 1 mm) wiedergefunden wird, was im Beispielsfall einer Ortsgenauigkeit in der Größenordnung von ca. ± 2 Pixel auf der Prüflingsoberfläche entspricht. Letzte Korrekturen zur positionsrichtigen Überlagerung werden dann rechnerisch mittels Software durch das Tracking, d.h. durch die Mustererkennung vorgenommen, wodurch eine effektive Positionstreue von ca. ± 1 Pixel bzw. ± 0,5 mm auf der Prüflingsoberfläche erreicht wird.

Diese Vorgehensweise berücksichtigt, dass die Prüfbedingungen in der Praxis meist nicht ideal sind. So kann es z.B. aufgrund von Schlupf zwischen Prüfgut und Fördersystem, Durchbiegungen des Prüfguts und/oder Bremsen des Prüfgutes beim Aufladen auf eine Rolle und anschließendem Beschleunigen zu Geschwindigkeitsschwankungen und anderen Ursachen für Positionsungenauigkeiten kommen. Hierdurch entstehende Prüfprobleme werden durch die Kombination aus Geschwindigkeitsmessung, dem darauf basierendem Auffinden potentiell defektbehafteter Oberflächenabschnitte und der nachfolgenden Suche von Oberflächenmustern (Tracking) vermieden.

In jedem der zeitlich nacheinander erfassten Bildausschnitte können dann ein oder mehrere über den Ort des potentiellen Defekts verlaufende Temperaturprofile ermittelt und gemeinsam ausgewertet werden. Wenn sich die Orte der Temperaturprofile, wie in Fig. 3B gezeigt, jeweils an der gleichen Stelle innerhalb des ausgewählten Bildabschnitts befinden, so entspricht jedes der positionsrichtig zugeordneten Temperaturprofile demselben linienartigen Messbereich der Oberfläche des Prüfgegenstandes, wobei dieser Messbereich über die Position des potentiellen Defektes hinweg verläuft. Zur Erläuterung sind hierzu in Fig. 3B links drei zu unterschiedlichen Zeitpunkten t₁, t₂>t₁ und t₃>t₂ aufgenommene, zum gleichen Oberflächenausschnitt gehörende Bildausschnitte 128, 128' und 128" gezeigt, wobei in jedem der Bildausschnitte ein in x-Richtung über den Defekt verlaufendes Temperaturprofil ermittelt wird. In der rechten Teilfigur sind die zeitlich nacheinander erfassten Temperaturprofile gemeinsam dargestellt, wobei die Abszisse die Position POS (x) in x-Richtung und die Ordinate die Temperatur T angibt. Auf diese Weise ist es möglich, an einem bewegten Prüfgegenstand die räumlichzeitliche Wärmeausbreitung im Bereich eines potentiellen Defektes hochgenau zu ermitteln.

Jedes der Temperaturprofile repräsentiert einen quer zum Defekt verlaufenden Bereich, bei dem der Defekt etwa in der Mitte liegt. Jedes der Temperaturprofile weist ein lokales Temperaturmaximum auf, dessen Höhe in Bezug auf die Umgebung (quantifiziert z.B. durch die Temperaturdifferenz ΔT) mit zunehmender Zeit abnimmt, wogegen die z.B. durch die Halbwertsbreite gegebene Breite des Maximums im Ortsraum mit zunehmender Zeit zunimmt. Diese positionsrichtig zugeordneten, zeitlich nacheinander aufgenommenen örtlichen Temperaturprofile erlauben nun quantitative Rückschlüsse auf die raum-zeitliche Wärmeausbreitung im Bereich eines potentiellen Defektes und können wie folgt ausgewertet werden.

Fig. 4 zeigt in 4A und 4B jeweils gemeinsame Darstellungen einer Vielzahl von positionsrichtig zugeordneten Temperaturprofilen, wobei die in den Darstellungen jeweils oberen Temperaturprofile zeitlich früher erfasst wurden als die jeweils darunter dargestellten Temperaturprofile.

Fig. 4A zeigt typische Temperaturprofile für eine Störung ST, die zwar ein lokales Temperaturmaximum etwa bei Pixel Nr. 7 erzeugt, die aber nicht auf einen oberflächennahen Riss zurückgeht. Fig. 4B zeigt zum Vergleich die positionsrichtig zugeordneten Temperaturprofile aus dem Bereich eines rissartigen Defektes DEF, wobei auch hier das lokale Temperaturmaximum jeweils im Bereich von Pixel Nr. 7 liegt. Die positionsrichtig zugeordneten Temperaturprofile werden nun anhand von Auswertekriterien analysiert, die aufgrund der raum-zeitlichen Entwicklung der Temperaturprofile relativ zuverlässige Schlüsse darüber zulassen, ob die raum-zeitliche Entwicklung der Temperaturverteilung der im Bereich eines Risses oder einer anderen Gefügestörung erwarteten, durch den Wärmefluss bedingten Dynamik entspricht oder anderen Gesetzen folgt.

Eines der Auswertekriterien bzw. Kenngrößen ist die Amplitude AMPM des Temperaturwertes am Ort des lokalen Temperaturmaximums innerhalb eines Temperaturprofils. Die erfindungsgemäße Kenngröße, die sich als sehr zuverlässig zur Bewertung der Dynamik der Wärmeausbreitung erwiesen hat, ist der Wärmekonzentrationswert KONZ im Bereich eines lokalen Maximums der Temperaturwerte innerhalb der Temperaturprofile. Fig. 5 zeigt in 5A den zeitlichen Verlauf der Amplitude AMPM und des Konzentrationswerts KONZ zu verschiedenen Zeitschritten t für eine nicht auf einen Riss zurückgehende Störung ST und in Fig. 5B den zeitlichen Verlauf der gleichen Kenngrößen im gleichen Zeitfenster für einen oberflächennahen Riss DEF. An den Ordinaten ist jeweils die Temperaturdifferenz ΔT der Temperatur am Ort des lokalen Maximums gegenüber der Umgebung angegeben.

Es hat sich bei einer Vielzahl von Versuchen gezeigt, dass im Bereich von Rissen sowohl die Abkühlrate, bzw. die Änderung der Temperatur am Ort des lokalen Temperaturmaximums über der Zeit, als auch der Konzentrationsverlust relativ groß sind und sich signifikant von den entsprechenden Werten unterscheiden, die sich im Bereich von Störungen nachweisen lassen, welche nicht auf Risse oder andere Gefügestörungen zurückgehen. Bei der Maximumstemperatur, die durch die Amplitude AMPM der Temperatur am Ort des lokalen Maximums repräsentiert wird, hat sich herausgestellt, dass diese nach Abschluss der Aufheizphase, d.h. während des Abkühlens, kontinuierlich abnimmt, und zwar mit relativ hoher Abkühlrate. Im Beispielsfall wird eine hohe Wahrscheinlichkeit für das Vorliegen eines Risses dann angenommen, wenn die Abkühlrate im Bereich von mindestens fünf aufeinanderfolgend aufgenommenen Thermografiebildern größer als ein vorgegebener Schwellwert für die Abkühlrate ist. Der Wärmemengenkonzentrationswert KONZ ist ein Maß für das Verhältnis der Wärmemenge unmittelbar am lokalen Temperaturmaximum im Vergleich zu der näheren Umgebung. Sinkt der Wärmekonzentrationswert mit der Zeit, so wird dadurch angezeigt, dass Wärme u.a. lateral in die Umgebung abfließt. Dies ist beispielsweise bei Rissen der Fall und wird dementsprechend als Hinweis gewertet, dass das beobachtete Signal durch die Wärmeausbreitung im Festkörper in der Nähe eines Risses verursacht wurde.

In dem anhand von Fig. 5A erläuterten Beispielsfall einer nicht auf einen Riss zurückgehenden Störung ist dagegen die Wärmemengenkonzentration KONZ von Anfang an geringer als im Falle eines Risses, außerdem steigt der Wärmemengenkonzentrationswert zum Beginn des beobachteten Zeitintervall zunächst an, bevor er allmählich abfällt. Auch die Maximumsamplitude AMPM steigt zunächst an, bevor sie mit einer relativ geringen Abkühlrate abfällt, die deutlich geringer ist als die im Bereich eines Risses erwartete Abkühlrate (Fig. 5B).

Auch andere Abweichungen des räumlich-zeitlichen Verhaltens der Wärmemengenkonzentration vom typischen durch Wärmefluss bedingten Verhalten bei Defekten können auftreten und als Anzeichen für eine nicht auf einen Riss o.dgl zurückgehende Störung genutzt werden. Beispielsweise kann der Wärmemengenkonzentrationswert über längere Zeit weitgehend gleichbleiben oder scheinbar zunehmen oder unverhältnismäßig abnehmen.

Diese Beispiele zeigen, dass durch die Analyse und die quantitative Auswertung von räumlich-zeitlichen Entwicklungen von Temperaturprofiten eine zuverlässige Unterscheidung zwischen verschiedenen Ursachen für zunächst festgestellte lokale Temperaturmaxima in einem Temperaturprofil möglich ist. Werden bei einer zunächst festgestellten Auffälligkeit im Prinzip die im Zusammenhang mit den Fig. 4B und 5B beschriebene Charakteristika festgestellt, so wird die Ursache als Riss klassifiziert und der entsprechende Oberflächenabschnitt gegebenenfalls durch die Markierungseinrichtung 170 markiert. Zeigt dagegen die raum-zeitliche Analyse ein für Risse, Lunker und andere Gefügestörungen untypisches Verhalten (vgl. z.B. Fig. 4A und 5A), so findet keine Rissanzeige statt. Auf diese Weise können mit hoher Zuverlässigkeit Pseudoanzeigen vermieden werden. Die Einbeziehung der räumlich-zeitlichen Wärmeausbreitung im Bereich eines potentiellen Defektes trägt entscheidend zur Störunterdrückung bei der Detektion und Identifizierung von Defekten mit Hilfe thermografischer Signale bei.

Anhand von Fig. 6 wird nochmals beispielhaft erläutert, auf welche Weise die Analyse der räumlich-zeitlichen Wärmeverteilung zur Störungsunterdrückung beitragen kann. Hierzu zeigt Fig. 6A den Ausschnitt eines Temperaturprofils, das etwa im Bereich von Pixel 455 ein sehr ausgeprägtes lokales Temperaturmaximum mit einer Temperaturdifferenz ΔT von mindestens 10K gegenüber der Umgebung enthält. Bei manchen herkömmlichen Prüfsystemen würden solche Anzeigen automatisch als sicherer Hinweis auf das Vorliegen eines tiefen Risses gewertet und der Prüfgegenstand entsprechend markiert und eventuell verworfen. Die raum-zeitliche Analyse der Wärmeausbreitung zeigt jedoch, dass es sich nicht um einen Riss handelt. In Fig. 6B sind positionsrichtig zugeordnete Temperaturprofile aus dem Bereich des lokalen Maximums für unterschiedliche Zeitpunkte gezeigt. Eine Besonderheit im Vergleich zu den Profilen aus Fig. 4 besteht darin, dass das Profil mit der größten Amplitude zeitlich später aufgenommen wurde (t₂ > t₁) als das zum früheren Zeitpunkt t₁ aufgenommene Profil mit deutlich kleinerer Amplitude. Die Anomalie lässt auch an den in Fig. 6C gezeigten zeitlichen Verläufen der Kenngrößen Amplitude am lokalen Maximum (AMPM) und Wärmemengenkonzentrationswert (KONZ) erkennen. Beide Werte steigen mit der Zeit an, was nicht mit einer Wärmeausbreitung im Bereich eines lokal aufgeheizten Risses erklärt werden kann. Im Beispielsfall geht das in Fig. 6A gezeigte starke lokale Temperaturmaximum auf eine Reflexion an dem entsprechenden Ort der Prüflingsoberfläche zurück. Da die zeitliche Entwicklung der Temperaturprofile in keiner Hinsicht ein für Risse typisches Ausbreitungsverhalten zeigt, würde eine solche Reflexion daher nicht zu einer Klassifikation als Riss führen. Von herkömmlichen Systemen würde der Reflex dagegen mit hoher Wahrscheinlichkeit fälschlich als Riss interpretiert werden.

Zusätzlich zu dem Wärmekonzentrationswert können auch andere Kenngrößen als Auswertekriterium herangezogen werden. Hierzu können beispielsweise Ableitungen der beschriebenen Zeitfunktionen, z.B. die Änderung der Abkühlrate mit der Zeit, herangezogen werden. Da die Wärmeausbreitung im Kern durch Lösungen der Wärmediffusionsgleichung beschrieben werden kann, ist es auch möglich, die zeitliche Entwicklung der Temperaturprofile im Bereich eines lokalen Maximums durch Anpassung einer Gaußkurve oder einer Fehlerfunktion zu quantifizieren, wobei in diesen Fällen bei einer guten Anpassung von einer durch Wärmefluss dominierten Wärmeausbreitung ausgegangen werden kann, während eine schlechte Anpassung auf andere Ursachen schließen lässt. Es ist auch möglich, Polynome als Näherungsfunktionen an die Temperaturprofile anzupassen und durch Analyse von Polynomenkoeffizienten eine Unterscheidung zwischen den gesuchten Defekten (z.B. Rissen) und unkritischen Störungen (beispielsweise Reflexen), zu treffen.

## Patentansprüche

1. Thermografisches Prüfverfahren zur ortsauflösenden Detektion und Identifikation von oberflächennahen Defekten in einem Prüfgegenstand mit folgenden Schritten:
Aufheizen eines Abschnitts des Prüfgegenstands mittels Induktion oder Ultraschall derart, dass sich ein thermisches Ungleichgewicht zwischen mit Defekten behafteten Defektbereichen und defektfreiem Prüfgegenstandsmaterial einstellt, wobei eine defektfreie Umgebung eines Defektbereichs weniger stark aufgeheizt wird als der Defektbereich;
Erfassen einer Folge von mit zeitlichem Abstand aufeinanderfolgenden Thermografiebildern innerhalb einer Wärmeausbreitungsphase, wobei jedes Thermografiebild eine örtliche Temperaturverteilung in einem von dem Thermografiebild erfassten Oberflächenbereich des Prüfgegenstands repräsentiert;
Ermitteln von positionsrichtig zugeordneten Temperaturprofilen aus den Thermografiebildern, wobei ein Temperaturprofil ein ortsauflösendes Profil ist, bei dem unterschiedlichen Orten innerhalb des Temperaturprofils jeweils Werte einer Messgröße zugeordnet sind, die die Temperatur am jeweiligen Ort repräsentiert, und wobei jedes positionsrichtig zugeordnete Temperaturprofil demselben Messbereich der Oberfläche des Prüfgegenstandes zugeordnet ist;
Ermitteln von zeitlichen Verläufen von Temperaturwerten aus den Temperaturprofilen für eine Vielzahl von durch die Temperaturprofile erfassten Messpositionen des Messbereichs; und
Auswerten der zeitlichen Verläufe nach mindestens einem den Wärmefluss in dem Messbereich charakterisierenden Auswertekriterium, wobei bei der Auswertung mindestens ein lokales Maximum der Temperaturwerte innerhalb der Temperaturprofile gesucht wird,
ein Wärmekonzentrationswert im Bereich des lokalen Maximums der Temperaturwerte innerhalb der Temperaturprofile ermittelt wird und
ein zeitlicher Verlauf des Wärmekonzentrationswerts zur Bewertung des lateralen Wärmeflusses ausgewertet wird,
wobei der Wärmekonzentrationswert ein Maß für das Verhältnis der Wärmemenge unmittelbar am lokalen Temperaturmaximum im Vergleich zu der näheren Umgebung ist in der Weise, dass der Wärmekonzentrationswert mit der Zeit sinkt, wenn Wärme lateral in die Umgebung abfließt.

2. Thermografisches Prüfverfahren nach Anspruch 1, worin bei der Auswertung ein zeitlicher Verlauf der Amplitude von Temperaturwerten im Bereich des lokalen Maximums ausgewertet wird.

3. Thermografisches Prüfverfahren nach einem der vorhergehenden Ansprüche, worin bei der Auswertung mindestens drei, vorzugsweise zwischen vier und zwanzig positionsrichtig zugeordnete Temperaturprofile gemeinsam ausgewertet werden.

4. Thermografisches Prüfverfahren nach einem der vorhergehenden Ansprüche, worin zur Prüfung eines langgestreckten Prüfgegenstands eine Relativbewegung zwischen dem Prüfgegenstand und einer Erfassungseinrichtung zum Erfassen der Thermografiebilder in einer vorzugsweise parallel zu einer Längsrichtung des Prüfgegenstandes verlaufenden Bewegungsrichtung derart erzeugt wird, dass die mit den Thermografiebilden erfassten Oberflächenbereiche in Bewegungsrichtung gegeneinander versetzt sind, wobei die Oberflächenbereiche unmittelbar nacheinander aufgenommener Thermografiebilder vorzugsweise in einem Überlappungsbereich überlappen.

5. Thermografisches Prüfverfahren nach Anspruch 4, worin die Erfassungseinrichtung stationär angebracht ist und der langgestreckte Prüfgegenstand relativ zur Erfassungseinrichtung bewegt wird.

6. Thermografisches Prüfverfahren nach Anspruch 4 oder 5, worin folgende Schritte durchgeführt werden:
Analysieren eines zu einem ersten Zeitpunkt erfassten ersten Thermografiebildes einer Folge von Thermografiebildern zur Identifizierung mindestens eines ersten ausgesuchten Bildausschnitts, der einen Oberflächenausschnitt mit einer defektähnlichen Auffälligkeit enthält;
automatisches Auffinden eines zu dem ersten Bildausschnitt korrespondierenden zweiten Bildausschnittes in einem mit zeitlichem Abstand zum ersten Thermografiebild zu einem späteren zweiten Zeitpunkt erfassten zweiten Thermografiebild;
gemeinsame Auswertung von Thermografiedaten des ersten Bildausschnitts und des zweiten Bildausschnitts,
wobei vorzugsweise bei der Identifizierung von defektähnlichen Auffälligkeiten ein lokales Maximum der Temperaturwerte innerhalb der Temperaturprofile gesucht wird.

7. Thermografisches Prüfverfahren nach Anspruch 4, 5 oder 6, worin zum automatischen Auffinden eine erwartete Position des die defektähnliche Auffälligkeit enthaltenden Oberflächenausschnitts in dem zweiten Thermografiebild auf Basis der Relativgeschwindigkeit zwischen dem Prüfgegenstand und der Erfassungseinrichtung, der Bewegungsrichtung und der zwischen dem ersten Zeitpunkt und dem zweiten Zeitpunkt verstrichenen Zeit ermittelt wird, wobei vorzugsweise die Relativgeschwindigkeit, insbesondere die Geschwindigkeit des Prüfgegenstandes, gemessen wird.

8. Thermografische Prüfvorrichtung zur ortsauflösenden Detektion und Identifikation von oberflächennahen Defekten in einem Prüfgegenstand mit:
einer induktiven oder mit Ultraschall arbeitenden Heizeinrichtung (110) zum Aufheizen eines Abschnitts des Prüfgegenstandes (180) derart, dass sich ein thermisches Ungleichgewicht zwischen mit Defekten behafteten Defektbereichen und defektfreiem Prüfgegenstandsmaterial einstellt, wobei eine defektfreie Umgebung eines Defektbereichs weniger stark aufgeheizt wird als der Defektbereich;
mindestens einer Erfassungseinrichtung (120) zum Erfassen einer Folge von mindestens zwei mit zeitlichem Abstand aufeinanderfolgenden Thermografiebildern; und
einer Auswerteeinrichtung zum Auswerten von Thermografiedaten der Thermografiebilder,
wobei die Prüfvorrichtung für die Durchführung des Prüfverfahrens nach einem der vorhergehenden Ansprüche konfiguriert ist.

## Claims

1. Thermographic test method for the locally resolving detection and identification of defects near the surface in a test object, comprising the following steps:
heating up a portion of the test object by means of induction or ultrasound, in such a way that a thermal disequilibrium occurs between defective regions, affected by defects, and material of the test object that is free from defects, a defect-free surrounding area of a defective region being heated up less intensely than the defective region;
recording a series of thermographic images following one after the other at a time interval within a heat propagation phase, each thermographic image representing a local temperature distribution in a surface region of the test object that is recorded by the thermographic image;
determining positionally correctly assigned temperature profiles from the thermographic images, a temperature profile being a locally resolving profile, wherein different locations within the temperature profile are respectively assigned values of a measured variable that represents the temperature at the respective location, and each positionally correctly assigned temperature profile being assigned to the same measuring region of the surface of the test object;
determining variations over time of temperature values from the temperature profiles for a large number of measuring positions of the measuring region that are recorded by the temperature profiles; and
evaluating the variations over time on the basis of at least one evaluation criterion characterizing the heat flow in the measuring region, wherein
in the evaluation at least one local maximum of the temperature values within the temperature profiles is sought,
a heat concentration value in the region of the local maximum of the temperature values within the temperature profiles is determined and
a variation over time of the heat concentration value is evaluated for assessing the lateral heat flow,
wherein the heat concentration value is a measure of the ratio of the volume of heat directly at the local temperature maximum in comparison with the nearby surrounding area, in such a way that the heat concentration value falls over time if heat flows away laterally into the surrounding area.

2. Thermographic test method according to Claim 1, wherein in the evaluation a variation over time of the amplitude of temperature values in the region of the local maximum is evaluated.

3. Thermographic test method according to either of the preceding claims, wherein in the evaluation at least three, preferably between four and twenty, positionally correctly assigned temperature profiles are evaluated together.

4. Thermographic test method according to any one of the preceding claims, wherein, for testing an elongated test object, a relative movement is produced between the test object and a recording device for recording the thermographic images in a direction of movement preferably extending parallel to a longitudinal direction of the test object in such a way that the surface regions recorded by the thermographic images are offset with respect to one another in the direction of movement, the surface regions of thermographic images recorded directly one after the other preferably overlapping in an overlapping region.

5. Thermographic test method according to Claim 4, wherein the recording device is provided in a stationary form and the elongated test object is moved in relation to the recording device.

6. Thermographic test method according to Claim 4 or 5, wherein the following steps are carried out:
analysing a first thermographic image, recorded at a first point in time, of a series of thermographic images for the identification of at least a first picked-out image detail, which contains a surface detail with a defect-like anomaly;
automatically finding a second image detail, corresponding to the first image detail, in a second thermographic image, recorded at a later, second point in time at a time interval from the first thermographic image;
evaluating thermographic data of the first image detail and of the second image detail together,
a local maximum of the temperature values within the temperature profiles preferably being sought if defect-like anomalies are identified.

7. Thermographic test method according to Claim 4, 5 or 6, wherein, for automatic finding, an expected position of the surface detail containing the defect-like anomaly in the second thermographic image is determined on the basis of the relative speed between the test object and the recording device, the direction of movement and the time that has passed between the first point in time and the second point in time, the relative speed, in particular the speed of the test object, preferably being measured.

8. Thermographic testing device for the locally resolving detection and identification of defects near the surface in a test object, comprising:
a heating device (110), operating on the basis of induction or ultrasound, for heating up a portion of the test object (180) in such a way that a thermal disequilibrium occurs between defective regions, affected by defects, and material of the test object that is free from defects, a defect-free surrounding area of a defective region being heated up less intensely than the defective region;
at least one recording device (120) for recording a series of at least two thermographic images following one after the other at a time interval; and
an evaluating device for evaluating thermographic data of the thermographic images,
the testing device being configured for carrying out the test method according to any one of the preceding claims.

## Revendications

1. Procédé de contrôle thermographique pour la détection à résolution spatiale et l'identification de défauts près de la surface dans un échantillon, comprenant les étapes suivantes consistant à :
chauffer une partie de l'échantillon par induction ou par ultrason de façon à créer un déséquilibre thermique entre des zones défectueuses affectées de défauts et le matériau exempt de défauts de l'échantillon, dans lequel un environnement exempt de défauts d'une zone défectueuse est chauffé moins fort que la zone défectueuse ;
détecter une séquence d'images thermographiques successives, espacées dans le temps, à l'intérieur d'une phase de propagation de chaleur, chaque image thermographique représentant une distribution de températures locale dans une zone de surface de l'échantillon, détectée par l'image thermographique ;
établir des profils de température correctement associés à des positions à partir des images thermographiques, un profil de température étant un profil à résolution spatiale dans lequel des valeurs d'une grandeur de mesure qui représente la température à l'endroit respectif sont respectivement associées à différents endroits à l'intérieur du profil de température, et dans lequel chaque profil de température correctement associé à une position est associé à la même zone de mesure de la surface de l'échantillon ;
établir des tracés dans le temps de valeurs de température à partir des profils de température pour une pluralité de positions de mesure de la zone de mesure, détectées par les profils de température ; et
exploiter les tracés dans le temps selon au moins un critère d'exploitation caractérisant le flux de chaleur dans la zone de mesure, dans lequel
lors de l'exploitation, au moins un maximum local des valeurs de température est recherché à l'intérieur des profils de température,
une valeur de concentration de chaleur au niveau du maximum local des valeurs de température est établie à l'intérieur des profils de température, et
un tracé dans le temps de la valeur de concentration de chaleur est exploiter pour évaluer le flux de chaleur latéral,
dans lequel la valeur de concentration de chaleur est une mesure du rapport de la quantité de chaleur directement au niveau du maximum de température local en comparaison avec l'environnement proche de telle sorte que la valeur de concentration de chaleur diminue avec le temps lorsque la chaleur se dissipe latéralement dans l'environnement.

2. Procédé de contrôle thermographique selon la revendication 1, dans lequel, lors de l'exploitation, un tracé dans le temps de l'amplitude des valeurs de température au niveau du maximum local est exploitée.

3. Procédé de contrôle thermographique selon l'une quelconque des revendications précédentes, dans lequel lors de l'exploitation, au moins trois, de préférence entre trois et vingt, profils de température correctement associés à des positions sont exploités conjointement.

4. Procédé de contrôle thermographique selon l'une quelconque des revendications précédentes, dans lequel pour le contrôle d'un échantillon allongé, un mouvement relatif entre l'échantillon et un dispositif de détection permettant de détecter les images thermographiques dans une direction de mouvement s'étendant de préférence en parallèle à une direction longitudinale est généré de telle sorte que les zones de surface détectées par les images thermographiques sont décalées les unes par rapport aux autres dans la direction de mouvement, dans lequel les zones de surface d'images thermographiques enregistrées directement les unes après les autres se chevauchent de préférence dans une zone de chevauchement.

5. Procédé de contrôle thermographique selon la revendication 4, dans lequel le dispositif de détection est installé de manière stationnaire, et l'échantillon allongé est déplacé par rapport au dispositif de détection.

6. Procédé de contrôle thermographique selon la revendication 4 ou 5, dans lequel les étapes suivantes sont exécutées, consistant à :
analyser une première image thermographique, détectée à un premier instant, d'une séquence d'images thermographiques pour identifier au moins une première tranche d'image sélectionnée qui contient une tranche de surface présentant une anomalie de type défaut ;
localiser automatiquement une deuxième tranche d'image correspondant à la première tranche d'image sur une deuxième image thermographique détectée à un deuxième instant ultérieur, espacé dans le temps par rapport à la première image thermographique ;
exploiter conjointement des données thermographiques de la première tranche d'image et de la deuxième tranche d'image,
dans lequel de préférence lors de l'identification d'anomalies de type défaut, un maximum local des valeurs de température est recherché dans les profils de température.

7. Procédé de contrôle thermographique selon la revendication 4, 5 ou 6, dans lequel, pour la localisation automatique, une position attendue de la tranche de surface contenant l'anomalie de type défaut sur la deuxième image thermographique est établie sur la base de la vitesse relative entre l'échantillon et le dispositif de détection, de la direction de mouvement et du temps écoulé entre le premier instant et le deuxième instant, dans lequel de préférence la vitesse relative, en particulier la vitesse de l'échantillon, est mesurée.

8. Dispositif de contrôle thermographique pour la détection à résolution spatiale et l'identification de défauts près de la surface dans un échantillon, comprenant :
un dispositif de chauffage (110) fonctionnant par induction ou par ultrason pour chauffer une partie de l'échantillon (180) de façon à créer un déséquilibre thermique entre la zone défectueuse affectée de défauts et le matériau exempt de défauts de l'échantillon, dans lequel un environnement exempt de défauts d'une zone défectueuse est chauffé moins fort que la zone défectueuse ;
au moins un dispositif de détection (120) pour détecter une séquence d'au moins deux images thermographiques enregistrées successives, espacées dans le temps ; et
un dispositif d'exploitation pour exploiter des données thermographiques des images thermographiques,
dans lequel le dispositif de contrôle est configuré pour exécuter le procédé de contrôle selon l'une quelconque des revendications précédentes.
